# EUROPÄISCHE PATENTSCHRIFT

(11) **EP 0 533 871 B1**
(45) Veröffentlichungstag und Bekanntmachung des Hinweises auf die Patenterteilung: **26.11.1997**
(21) Anmeldenummer: 92906784.1
(22) Anmeldetag: 20.03.1992
(51) Int. Cl.: E02B 15/04

(54) **VORRICHTUNG ZUR BESEITIGUNG VON ÖL**
OIL REMOVAL DEVICE
DISPOSITIF D'ELIMINATION D'HUILE

(30) Priorität: 20.03.1991 DE 4109577
(43) Veröffentlichungstag der Anmeldung: 31.03.1993
(73) Patentinhaber: GUTEC mbH, Gesellschaft für Umweltschutz und Technik, D-26389 Wilhelmshaven (DE)
(72) Erfinder: WEINEM, Hannelore, D-26389 Wilhelmshaven (DE)
(74) Vertreter: Behrendt, Arne, Dipl.-Ing.
(86) Internationale Anmeldenummer: EP9200614
(87) Internationale Veröffentlichungsnummer: WO9216693

(56) Entgegenhaltungen:
- WO-A-80/00161
- GB-A- 2 118 855
- US-A- 1 860 819
- US-A- 3 539 508

## Beschreibung

Die Erfindung betrifft eine Vorrichtung zur Beseitigung von Öl und ölhaltigen Substanzen aus einer Flüssigkeit, insbesondere aus Wasser, mit einer Einrichtung zum Sammeln des Öls, mit mehreren in die ölverschmutzte Flüssigkeit zumindest teilweise eintauchenden, um ihre Längsachsen drehbaren Rohren, deren Wandungen an ihren Oberflächen derart behandelt sind, daß sie gegenüber Öl und ölhaltigen Substanzen besonders adhäsionsfreudig sind, und mit jeweils mindestens einem an der Wandung eines jeden Rohres anliegenden Abstreifelement zum Abstreifen des Ols und der ölhaltigen Substanzen von der Wandung des jeweiligen Rohres und zum Weiterleiten an die Sammeleinrichtung.

Vorrichtungen zum Beseitigen von Öl sind in vielfältiger Form bekannt. Ein Großteil der bekannten Anlagen arbeitet nach dem Saugprinzip unter Ausnutzung der Erkenntnis, daß Öl leichter als Wasser ist und auf der Oberfläche von Wasser schwimmt. Bevor das Öl von der Wasseroberfläche abgesaugt wird, werden bei den meisten herkömmlichen Anlagen sogenannte Ölbarrieren z. B. in Form von aufblasbaren Schläuchen ausgebracht, innerhalb derer das Öl auf der Wasseroberfläche gesammelt werden kann. Ferner ist mittlerweile ein Ölauffangschiff gebaut worden, das in Fahrtrichtung in zwei Hälften unterteilt ist, die im Heckbereich über ein Gelenk miteinander verbunden sind. Die beiden Hälften werden zum Absaugen des Öls auseinandergeklappt und dienen dann als Auffangbarriere für das Öl. Dieses Ölauffangschiff läuft z. Zt. unter dem Namen "Mellum".

Es hat sich jedoch herausgestellt, daß die bekannten Anlagen nur eine relativ geringe Aufnahmekapazität besitzen und daher nicht sehr effektiv arbeiten. Sie sind daher nur zur Reinigung von lokal verschmutzten Gewässern, also von Gewässern mit einer relativ kleinen verschmutzten Fläche, einsetzbar. Zur Reinigung größerer Gewässer oder gar Meere, wie z. B. des z. Zt. ölverschmutzten Persischen Golfes, sind die bekannten Anlagen und Vorrichtungen überfordert, da in diesen Fällen die Reinigung Monate bis Jahre in Anspruch nehmen würde. Außerdem sind die bekannten Anlagen und Vorrichtungen in ihrem Aufbau recht kompliziert und daher wartungsanfällig.

Es ist auch verschiedentlich eine chemische Reinigung von ölverscbmutztem Wasser vorgeschlagen worden. Bei einem dieser Verfahren werden chemische Zusatzstoffe in das Wasser gegeben, die das Öl binden sollen. Allerdings muß dann für eine Beseitigung der das Öl bindenden chemischen Zusatzstoffe gesorgt werden, was nicht weniger problematisch ist als die direkte Ölbeseitigung. Ein weiteres Problem besteht darin, daß ein Großteil der chemischen Bindemittel ebenfalls nicht umweltverträglich ist.

Die Vorrichtung der eingangs genannten Art, die beispielsweise aus der WO-A- 80/00161 bekannt ist, hat ebenfalls nur eine begrenzte Reinigungskapazität. Die von dem verunreinigten Gewässer aufgenommene Ölmenge ist nämlich hier direkt abhängig von der Größe der Öl-adhäsiven Oberfläche der rotierenden Trommeln oder Rohre. Um die Reinigungskapazität bei Vorrichtungen nach diesem Stand der Technik zu erhöhen, ist es notwendig, entsprechend viele oder große Öl-adhäsive Rohre zum Einsatz zu bringen. Es ist leicht einzusehen, daß solche Maßnahmen zu einem enormen Platzbedarf der Vorrichtung führen. Bedingt durch ihre Abmessungen wurden die Vorrichtungen nach dem Stande der Technik dann sehr unhandlich. Weiterhin wird dadurch ein schneller und einfacher Transport der Vorrichtung zum Einsatzort - z. B. bei Tankschiffunglücken - erheblich erschwert.

Es ist daher Aufgabe der Erfindung, eine leistungsstärkere Vorrichtung zur Beseitigung von Öl der vorgenannten Art bereitzustellen, wobei der Aufbau der Vorrichtung möglichst kompakt sein soll.

Diese Aufgabe wird dadurch gelöst, daß bei der Vorrichtung der eingangs genannten Art mehrere an ihren Enden offene Rohre zu einem Rohrbündel zusammengefaßt sind, in dem sie ineinandergeschachtelt angeordnet sind, wobei die Wandungen der Rohre einen Abstand voneinander aufweisen.

Durch die erfindungsgemäße Gestaltung der Vorrichtung wird durch die Anzahl der ineinandergeschachtelten Rohre die Öl-adhäsive Oberfläche stark vergrößert. Daraus resultiert eine enorme Steigerung der Reinigungskapazität unter gleichzeitiger Beibehaltung eines relativ kompakten Aufbaus. Ein vorteilhafter, symmetrischer Aufbau ergibt sich, wenn die einzelnen ineinandergeschachtelten Rohre koaxial zueinander angeordnet sind. Untersuchungen belegen, daß eine Vorrichtung mit ineinandergeschachtelten Rohren jeweils dann besonders effektiv arbeitet, wenn Antriebsmittel zur Rotation der Rohre vorgesehen sind, die die Rohre derart unabhängig voneinander antreiben, daß sich jeweils zwei ineinandergeschachtelte benachbarte Rohre gegenläufig zueinander drehen und/oder die Drehwinkelgeschwindigkeit der Rohre mit zunehmendem Durchmesser abnimmt.

Vorzugsweise sind die Wandungen der Rohre mit einem Material beschichtet, das gegenüber Öl und ölhaltigen Substanzen besonders adhäsionsfreudig ist. Alternativ kann die Oberfläche der Wandung des Rohres auch hochglänzend poliert sein. Dieses sind besonders geeignete Maßnahmen, um das Öl bzw. die ölhaltigen Substanzen an der Rohrwandung binden zu können, wobei gleichzeitig die eigentliche Flüssigkeit zumindest im wesentlichen abgestoßen wird.

Bei einer weiteren zweckmäßigen Ausführung der Erfindung sind die Abstreifelemente gegenüber der Drehachse der Rohre im wesentlichen ortsfest angeordnet. Die Abstreifwirkung wird hier also durch die Relativbewegung zwischen dem sich drehenden Rohr und dem ortsfesten Abstreifelement erzielt. Gleichwohl kann das Abstreifelement aber auch gegenüber der Rohrwandung selbst bewegt werden.

Bei einer weiteren gegenwärtig besonders bevorzugten Ausführung der Erfindung sind die Abstreifelemente so angeordnet und werden die Rohre so in die Flüssigkeit eingetaucht, daß sich die Abstreifelemente außerhalb der Flüssigkeit befinden. Diese Ausführung läßt eine besonders einfache Konstruktion der Abstreifelemente insbesondere bezüglich der Weiterleitung des aufgenommenen Öls an die Sammeleinrichtung zu. Zweckmäßigerweise sollten dabei die Abstreifelemente die Form von Rinnen haben, welche eine besonders einfache Weiterleitung des abgestreiften Öls zur Sammeleinrichtung erlauben.

Die Abstreifelemente können sich vorzugsweise in Längsrichtung des Rotors und über die gesamte Länge des Rohres erstrecken, wobei sie parallel zur Längsachse des Rohres verlaufen können, um eine besonders gute Abstreifwirkung zu erzielen.

Die Rohre sollten im wesentlichen in Längsrichtung bewegt werden, damit die ölverschmutzte Flüssigkeit durch die Rohre hindurchfließen kann. Auf diese Weise wird die zuvor gereinigte Flüssigkeit in besonders einfacher Weise gegen noch verschmutzte und zu reinigende Flüssigkeit ausgetauscht, wodurch eine kontinuierliche Reinigung der gesamten Flüssigkeit möglich wird. Außerdem ist der Strömungswiderstand bei einer Bewegung des oder der Rohre in Längsrichtung durch die Flüssigkeit am geringsten, insbesondere wenn sich auch noch das oder die Abstreifelemente in Längsrichtung des oder der Rohre erstrecken. Alternativ brauchen dagegen das oder die Rohre in strömenden Gewässern nicht bewegt zu werden, sondern können verankert werden, da durch die Strömung des Gewässers ein Durchfluß der Flüssigkeit durch die Rohre gewährleistet ist.

Bei einer zweckmäßigen Weiterbildung der Erfindung sind die Rohre an einem Schwimmkörper gelagert, welcher entweder mit einem eigenen Antrieb zur Fortbewegung durch die Flüssigkeit oder mit Mitteln zum Ziehen des Schwimmkörpers mit Hilfe externer Fahrzeuge oder Antriebe durch die Flüssigkeit versehen ist.

Nachfolgend wird ein bevorzugtes Ausführungsbeispiel der Erfindung anhand der beiliegenden Figuren näher erläutert. Es zeigen:
Fig. 1 eine schematische perspektivische Darstellung einer ölbeseitigungsvorrichtung;
Fig. 2 eine schematische perspektivische Ansicht der in der ölbeseitigungsvorrichtung verwendeten Rohrbündel; und
Fig. 3 eine Draufsicht auf die Ölbeseitigungsvorrichtung in schematischer Form.

Nachfolgend wird eine Vorrichtung zur Beseitigung von öl und ölhaltigen Substanzen aus Meerwasser beschrieben. Gleichwohl kann eine solche Vorrichtung auch prinzipiell zur Reinigung jedweder anderer ölverschmutzter Flüssigkeit verwendet werden.

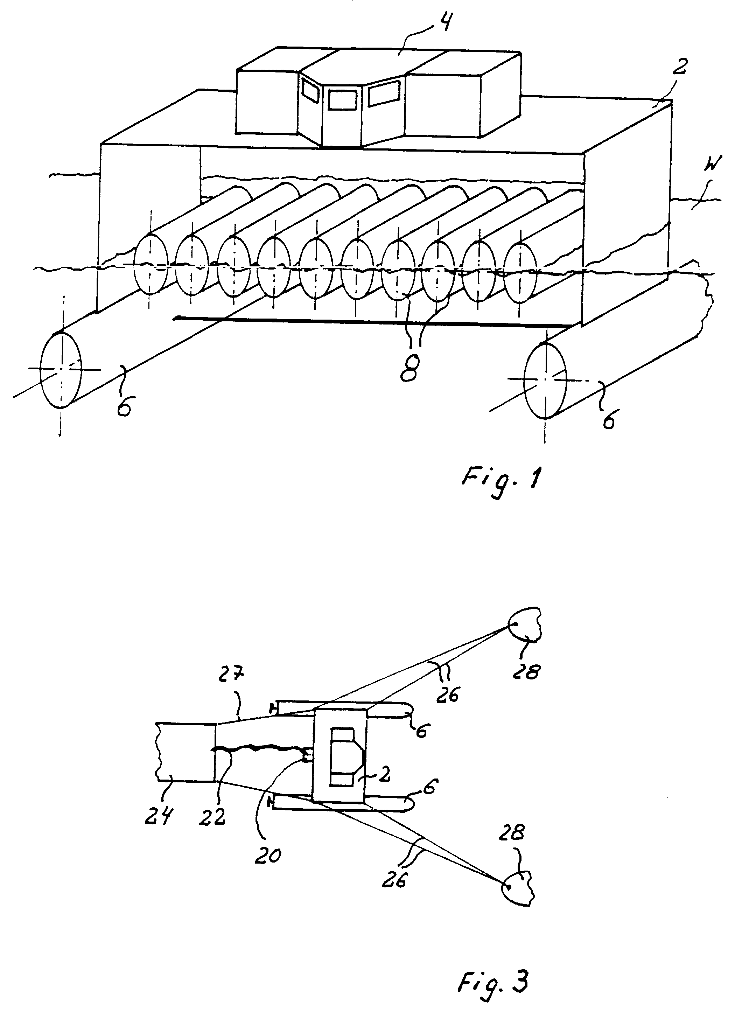

In Fig. 1 ist schematisch eine solche Vorrichtung in ihrer Gesamtheit dargestellt. Wie Fig. 1 erkennen läßt, ist die Vorrichtung als Schwimmfahrzeug ausgebildet, welches einen kastenförmigen Rumpf 2 aufweist. Auf dem kastenförmigen Rumpf 2 ist eine Brücke bzw. Führer- oder Bedienhäuschen 4 aufgesetzt, von dem die gesamte Vorrichtung gesteuert wird. Die Vorrichtung kann gleichwohl auch fernbedient werden. Um den nötigen Auftrieb zu erhalten, ist die Vorrichtung im dargestellten Ausführungsbeispiel mit zwei Schwimmern 6 versehen. Die Schwimmer 6 enthalten nichtdargestellte Kammern und ein entsprechendes Ausgleichsrohr, wodurch eine exakte Trimmung der Schwimmlage möglich wird.

Wie Fig. 1 ferner erkennen läßt, sind im kastenförmigen Rumpf 2 mehrere Rohrbündel 8 untergebracht. Die Rohrbündel 8 liegen mit parallel zueinander verlaufenden Längsachsen nebeneinander auf einer Horizontalebene. Die Rohrbündel 8 sind an ihren Enden offen. Der kastenförmige Rumpf 2 ist so ausgebildet und die Rohrbündel 8 sind innerhalb des Rumpfes 2 so angeordnet, daß nach Eintauchen in das Wasser dieses durch die Rohrbündel 8 fließen kann.

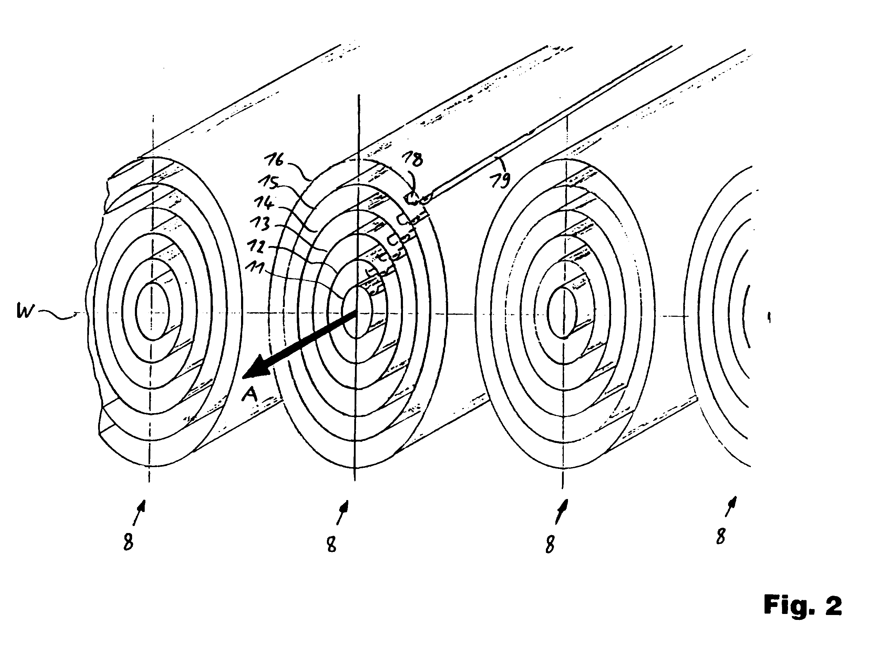

Fig. 2 zeigt eine vergrößerte Einzelansicht der Rohrbündel 8, wobei aus Gründen der übersichtlichkeit nur die interessierenden Elemente des zweiten Rohrbündels von links in Fig. 2 mit Bezugszeichen versehen sind, da alle Rohrbündel 8 in gleicher Weise aufgebaut sind. Im dargestellten Ausführungsbeispiel besteht jedes Rohrbündel 8 aus sechs einzelnen Rohren 11 bis 16. Dabei sind die Rohre 11 bis 16 ineinander und im Abstand koaxial zueinander angeordnet. Da die Rohre 11 bis 16 eine zylindrische Form besitzen, liegen somit sämtliche Achsen der Rohre 11 bis 16 auf einer gemeinsamen Achse, die die Längsachse des jeweiligen Rohrbündels 8 bildet.

Die Wandungen der einzelnen Rohre 11 bis 16 sind an ihrer Oberfläche so behandelt, daß sie gegenüber Öl und ölhaltigen Substanzen besonders adhäsionsfreudig sind. Insbesondere können die Wandungen der Rohre 11 bis 16 mit einer Spezialbeschichtung versehen sein, die gegenüber Öl und ölhaltigen Substanzen besonders adhäsionsfreudig ist. Alternativ kann die Oberfläche der Wandung der Rohre 11 bis 16 auch hochglänzend poliert sein.

Die einzelnen Rohre 11 bis 16 sind drehbar gelagert. Sie können dabei beispielsweise von nichtdargestellten kugelgelagerten und gummibeschichteten Laufrollen gehalten sein, welche in einer in den Rohren ausgebildeten Vertiefung laufen. Ferner sind nicht näher dargestellte Antriebsmittel vorgesehen, die die einzelnen Rohre 11 bis 16 in Rotation versetzen. Die Antriebsmittel sind im Rumpf 2 untergebracht und können die einzelnen Rohre 11 bis 16 beispielsweise über nicht näher dargestellte Teflonzahnräder antreiben, welche mit gebogenen TeflonZahnstangen kämmen, die an den Rohren entlang ihres Umfanges angebracht sind. Vorzugsweise werden als Antriebsmittel elektrische Motoren gewählt.

Die Antriebsmittel treiben die einzelnen Rohre 11 bis 16 unabhängig voneinander an und werden dabei von nicht näher dargestellten Steuereinrichtungen so gesteuert, daß sich jeweils zwei benachbarte Rohre gegenläufig zueinander drehen und die Drehwinkelgeschwindigkeit der Rohre 11 bis 16 mit zunehmendem Durchmesser abnimmt. Die höchste Drehzahl hat also das innerste Rohr 16, während das äußerste Rohr 16 mit der niedrigsten Drehzahl angetrieben wird.

Ferner sind Ölabstreifrinnen vorgesehen, die an der Wandung jedes Rohres beidseitig anliegen. Aus Gründen der Übersichtlichkeit sind in Fig. 2 nur die zum äußersten Rohr 16 zugehörigen inneren und äußeren ölabstreifrinnen mit Bezugzeichen 18 und 19 gekennzeichnet. Bei dem dargestellten Ausführungsbeispiel erstrecken sich die Ölabstreifrinnen 18, 19 parallel zur Drehachse des zugehörigen Rohres über dessen gesamte Länge. Sie sind außerdem im dargestellten Ausführungsbeispiel gegenüber der Drehachse der Rohre 11 bis 16 ortsfest angeordnet und am Rumpf 2 befestigt.

Fig. 3 zeigt eine Draufsicht auf die Gesamtanordnung der Vorrichtung mit zusätzlichen Einrichtungen. An der Rückseite des kastenförmigen Rumpfes 2 ist ein ölauffangsumpf 20 vorgesehen, an denen die einzelnen ölabstreifrinnen der Rohrbündel 8 angeschlossen sind. Der ölauffangsumpf 20 ist wiederum über eine Schlauchleitung 22 mit einer hinter dem kastenförmigen Rumpf 2 befindlichen Sammeleinrichtung 24 verbunden. Die in Fig. 3 dargestellte Ausführung soll mit Hilfe von Schleppern durch das Wasser gezogen werden. Hierzu sind Trossen 26, 27 vorgesehen, über die der kastenförmige Rumpf 2 und die dahinterliegende Sammeleinrichtung 24 von Schleppern 28 gezogen werden, von denen in Fig. 3 nur das Heck dargestellt ist.

Alternativ kann die Vorrichtung aber auch mit einem eigenen Antrieb versehen sein. Dieser kann beispielsweise aus einem oder mehreren Elektromotoren bestehen, die zweckmäßigerweise in den Schwimmern 6 untergebracht sein können.

Nachstehend soll kurz die Funktionsweise der zuvor beschriebenen Vorrichtung erläutert werden.

Die Schwimmlage des Rumpfes 2 wird bei dem beschriebenen Ausführungsbeispiel so getrimmt, daß die Rohrbündel 8 und somit die einzelnen Rohre 11 bis 16 etwa zur Hälfte eingetaucht sind und somit deren Drehachsen im wesentlichen auf der Wasseroberfläche W liegen, wie Figuren 1 und 2 erkennen lassen. Die Vorrichtung wird nun so durch das Wasser gezogen, daß die Rohrbündel 8 und somit die einzelnen Rohre 11 bis 16 in Richtung ihrer Achsen, also in Richtung des in Fig. 2 dargestellten Pfeils A, durch das Wasser bewegt werden. Wie Fig. 2 außerdem erkennen läßt, sind die ölabstreifrinnen 18, 19 so angeordnet, daß sie sich bei dem dargestellten Ausführungsbeispiel sämtlich oberhalb der Wasseroberfläche W befinden.

Während die Vorrichtung durch das Wasser gezogen wird, strömt das Wasser durch die Rohrbündel 8 hindurch. Da die Wandungen der einzelnen Rohre 11 bis 16 gegenüber öl und ölhaltigen Substanzen besonders adhäsionsfreudig sind, lagern sich nun Öl und ölhaltige Substanzen an den Rohrwandungen ab. Gleichzeitig drehen sich die Rohre um ihre Längsachse in der zuvor beschriebenen Weise. Dadurch wird das an den Rohrwandungen abgelagerte Öl im wesentlichen ohne das Wasser mitgenommen, bis es die Ölabstreifrinnen 18, 20 erreicht. Dort werden das Öl und die ölhaltigen Substanzen durch die ölabstreifrinnen 18, 19 von den Rohrwandungen abgestreift. Das von den ölabstreifrinnen 18, 19 aufgefangene Öl bzw. die ölhaltigen Substanzen werden nun von den ölabstreifrinnen 18, 19 an den Ölauffangsumpf 20 (vgl. Fig. 3) weitergeleitet. Die von den ölabstreifrinnen 18, 19 gereinigten Rohrwandungen sind nun bereit zur Ablagerung weiteren Öls bzw. weiterer ölhaltiger Substanzen aus der durch die Rohre 11 bis 16 nachfließenden Flüssigkeit. Der Reinigungsvorgang wiederholt sich nun von neuem, so daß während der Fortbewegung der Vorrichtung durch das Wasser eine kontinuierliche Reinigung durchgeführt werden kann.

## Patentansprüche

1. Vorrichtung zur Beseitigung von Öl und ölhaltigen Substanzen aus einer Flüssigkeit (W), insbesondere dem Wasser, mit einer Einrichtung zum Sammeln des Öls, mit mehreren in die ölverschmutzte Flüssigkeit zumindest teilweise eintauchenden, um ihre Längsachsen drehbaren Rohre (11 bis 16), deren Wandungen an ihren Oberflächen derart behandelt sind, daß sie gegenüber Öl und ölhaltigen Substanzen besonders adhäsionsfreudig sind, und mit jeweils mindestens einem an der Wandung eines jeden Rohres anliegenden Abstreifelement (18, 19) zum Abstreifen des Öls und der ölhaltigen Substanzen von der Wandung des jeweiligen Rohres (11 bis 16) und zum Weiterleiten an die Sammeleinrichtung (20, 22, 24), **dadurch gekennzeichnet,** daß mehrere an ihren Enden offene Rohre (11 bis 16) zu einem Rohrbündel (8) zusammengefaßt sind, indem sie ineinander geschachtelt angeordnet sind, wobei die Wandungen der Rohre einen Abstand voneinander aufweisen.

2. Vorrichtung nach Anspruch 1, dadurch gekennzeichnet, daß die Oberflächen der Wandungen der Rohre (11 bis 16) des Rohrbündels (8) mit einem Material beschichtet sind, das gegenüber Öl oder ölhaltigen Substanzen besonders adhäsionsfreudig ist.

3. Vorrichtung nach Anspruch 1, dadurch gekennzeichnet, daß die Oberflächen der Wandungen der Rohre (11 bis 16) des Rohrbündels (8) hochglänzend poliert sind.

4. Vorrichtung nach Anspruch 1, dadurch gekennzeichnet, daß die Rohre (11 bis 16) des Rohrbündels (8) koaxial zueinander angeordnet sind.

5. Vorrichtung nach Anspruch 1, dadurch gekennzeichnet, daß die Rohre (11 bis 16) des Rohrbündels (8) durch Antriebsmittel zur Rotation um ihre Längsachsen derart antreibbar sind, daß sich jeweils zwei ineinander geschachtelte, benachbarte Rohre gegenläufig zueinander drehen.

6. Vorrichtung nach Anspruch 1, dadurch gekennzeichnet, daß die Rohre (11 bis 16) des Rohrbündels (8) durch Antriebsmittel zur Rotation um ihre Längsachsen derart antreibbar sind, daß die Drehwinkelgeschwindigkeit der Rohre (11 bis 16) eines Rohrbündels (8) mit zunehmendem Durchmesser abnimmt.

7. Vorrichtung nach einem der Ansprüche 1 bis 6, dadurch gekennzeichnet, daß die Abstreifelemente (18, 19) gegenüber der Drehachse der Rohre (11 bis 16) im wesentlichen ortsfest angeordnet sind.

8. Vorrichtung nach einem der Ansprüche 1 bis 7, dadurch gekennzeichnet, daß die Abstreifelemente (18, 19) so angeordnet sind und die Rohre (11 bis 16) so in die Flüssigkeit (W) eingetaucht werden, daß sich die Abstreifelemente (18, 19) außerhalb der Flüssigkeit (W) befinden.

9. Vorrichtung nach Anspruch 1, dadurch gekennzeichnet, daß die Abstreifelemente (18, 19) die Form von Rinnen haben.

10. Vorrichtung nach Anspruch 1, dadurch gekennzeichnet, daß sich die Abstreifelemente (18, 19) in Längsrichtung der Rohre (11 bis 16) erstrecken.

11. Vorrichtung nach Anspruch 10, dadurch gekennzeichnet, daß die Abstreifelemente (18, 19) jeweils parallel zur Längsachse der Rohre (11 bis 16) verlaufen.

12. Vorrichtung nach einem der Ansprüche 1 bis 11 dadurch gekennzeichnet, daß die Rohre (11 bis 16), zusätzlich zur Drehung in Längsrichtung bewegbar sind.

13. Vorrichtung nach einem der Ansprüche 1 bis 12, dadurch gekennzeichnet, daß die Rohre (11 bis 16) an einem Schwimmkörper (6) gelagert sind.

14. Vorrichtung nach Anspruch 13, dadurch gekennzeichnet, daß der Schwimmkörper (6) mit einem eigenen Antrieb zur Fortbewegung durch die Flüssigkeit (W) versehen ist.

15. Vorrichtung nach Anspruch 14, gekennzeichnet durch Mittel (26) zum Ziehen des Schwimmkörpers (6) mit Hilfe externer Fahrzeuge (28) oder Antriebe durch die Flüssigkeit (W).

## Claims

1. Device for for removing oil and oil-containing substances from a liquid (W), in particular from water, with a system for collecting the oil, with several tubes (11 to 16) being at least partially immersible in the oil-contaminated liquid (W) and rotable about their longitudinal axis, the walls of said tubes (11 to 16) being treated on their surfaces in such a way that they are favorable to adhesion vis-a-vis oil and oil-containing substances, and with at least one stripping element (18,19) resting against the wall of each tube (11 to 16) for stripping the oil and the oil-containing substances from the wall of the respective tube (11 to 16) and passing them to the collecting system, **characterized in;** that several open-ended tubes (11 to 16) are combined in a cluster (8) of tubes by arranging the tubes one in another and with a spacing between one another.

2. Decive according to claim 1, characterized in, that the surfaces of the walls of the tubes (11 to 16) of the cluster (8) are coated with a material which is particularly favorable to adhesion vis-a-vis oil and oil-containing substances.

3. Device according to claim 1, characterized in, that the surfaces of the walls of the tubes (11 to 16) of the cluster (8) are polished to a high gloss.

4. Device according to claim 1, characterized in, that the tubes (11 to 16) of the cluster (8) are arranged coaxially with one another.

5. Device according to claim 1, charaterized in, that the tubes (11 to 16) of the cluster (8) are driven by driving means for rotating the tubes (11 to 16) around their longitudinal axis in a way such that each two adjacent tubes arranged one in another contrarotate relative to one another.

6. Device according to claim 1, characterized in, that the tubes (11 to 16) of the cluster (8) are driven by driving means for rotating the tubes (11 to 16) around their axis in a way such that the angle-of-rotation speed of the tubes (11 to 16) of the cluster (8) decreases with the increase in diameter.

7. Device according to any one of claims 1 to 6, characterized in, that the stripping elements (18, 19) are arranged substantially stationarily vis-a-vis the axis of the rotation of the tubes (11 to 16).

8. Device according to any one of claims 1 to 7, characterized in, that the stripping elements (18,19) are arranged and the tubes (11 to 16) immersed in the liquid (W) in such a way that the stripping elements (18, 19) are disposed outside the liquid (W).

9. Device according to any one of claims 1 to 8, characterized in, that the stripping elements (18, 19) have the form of drains.

10. Device according to any one of claims 1 to 9, characterized in, that the stripping elements (18, 19) extend in the longitudinal direction of the tubes (11 to 16).

11. Device according to claim 10, characterized in, that the stripping elements (18, 19) extend parallel with the longitudinal axis of the tubes (11 to 16).

12. Device according to any one of claims 1 to 11, characterized in, that the tubes (11 to 16) are movable in the longitudinal direction additionally to their rotation.

13. Device according to any one of claims 1 to 12, characterized in, that the tubes (11 to 16) are supported on a floating body (6).

14. Device according to claim 13, characterized in, that the floating body (6) is provided with an own drive for moving through the liquid (W).

15. Device according to claim 14, characterized by means (26) for dragging the floating body (6) through the liquid (W) with the help of external vehicles (28) or drives.

## Revendications

1. Dispositif d'élimination d'huile et de substances huileuses d'un liquide (W), notamment de l'eau, avec une installation de collecte d'huile, avec plusieurs tuyaux plongeant au moins partiellement dans le liquide contaminé par l'huile, pouvant tourner autour de leurs axes longitudinaux (11 à 16) dont les parois sont traitées à leurs surfaces de façon à être particulièrement adhésives par rapport à l'huile et des substances huileuses, et avec respectivement au moins un élément de raclage (18, 19) s'appliquant à la paroi de chaque tuyau pour racler l'huile et les substances huileuses de la paroi du tuyau respectif (11 à 16) et pour la transmission à l'installation de collecte (20, 22, 24), caractérisé en ce que plusieurs tuyaux (11 à 16) ouverts à leurs extrémités sont réunis pour former un faisceau de tuyau (8) en étant emboîtés les uns dans les autres, les parois des tuyaux présentant un écart entre elles.

2. Dispositif selon la revendication 1, caractérisé en ce que les surfaces des parois des tuyaux (11 à 16) du faisceau de tuyau (8) sont recouverts d'un matériau qui est particulièrement adhésif relativement à l'huile ou des substances huileuses.

3. Dispositif selon la revendication 1*,* caractérisé en ce que les surfaces des parois des tuyaux (11 à 16 ) du faisceau de tuyau (8) ont un fini brillant spéculaire.

4. Dispositif selon la revendication 1, caractérisé en ce que les tuyaux (11 à 16) du faisceau de tuyau (8) sont disposés coaxialement les uns relativement aux autres.

5. Dispositif selon la revendication 1, caractérisé en ce que les tuyaux (11 à 16) du faisceau de tuyau (8 ) peuvent être entraînés par des moyens d'entraînement pour tourner autour de leurs axes longitudinaux de façon que respectivement deux tuyaux emboîtés avoisinants tournent en sens contraire l'un relativement à l'autre.

6. Dispositif selon la revendication 1, caractérisé en ce que les tuyaux (11 à 16) du faisceau de tuyau (8 ) peuvent être entraînés par des moyens d'entraînement pour tourner autour de leurs axes longitudinaux de façon que la vitesse angulaire de rotation des tuyaux (11 à 16) d'un faisceau de tuyau (8) diminue au fur et à mesure que le diamètre augmente.

7. Dispositif selon l'une des revendications 1 à 6, caractérisé en ce que les éléments de raclage (18, 19) sont disposés essentiellement fixes relativement à l'axe de rotation des tuyaux (11 à 16).

8. Dispositif selon l'une des revendications 1 à 7, caractérisé en ce que les éléments de raclage (18, 19) sont disposés de façon et que les tuyaux (11 à 16) sont plongés dans le liquide (W) de façon que les éléments de raclage (18, 19) se trouvent à l'extérieur du liquide (W).

9. Dispositif selon la revendication 1, caractérisé en ce que les éléments de raclage (18, 19 ) ont la forme de goulottes .

10. Dispositif selon la revendication 1, caractérisé en ce que les éléments de raclage (18, 19) s'étendent dans la direction longitudinale des tuyaux (11 à 16).

11. Dispositif selon la revendication 10, caractérisé en ce que les éléments de raclage (18, 19) s'étendent respectivement parallèlement à l'axe longitudinal des tuyaux (11 à 16).

12. Dispositif selon l'une des revendications 1 à 11, caractérisé en ce que les tuyaux (11 à 16), en plus de la rotation, sont déplaçables dans la direction longitudinale.

13. Dispositif selon l'une des revendications 1 à 12, caractérisé en ce que les tuyaux (11 à 16) sont logés sur un corps flottant (6).

14. Dispositif selon la revendication 13, caractérisé en ce que le corps flottant (6) est pourvu d'une commande propre pour le déplacement à travers le liquide (W).

15. Dispositif selon la revendication 14, caractérisé par des moyens (26) pour tirer le corps flottant 6) à l'aide de véhicules (28) ou de commandes externes à travers le liquide (W).
